# FASCICULE DE BREVET EUROPEEN

(11) **EP 4 090 863 B1**
(45) Date de publication et mention de la délivrance du brevet: **09.10.2024**
(21) Numéro de dépôt: 20839115.1
(22) Date de dépôt: 28.12.2020
(51) Int. Cl.: F16H 61/12, F16H 55/17, F16H 57/01

(54) **ROUE DENTEE CONNECTEE, DISPOSITIF ET PROCEDE DE CONTROLE DE LA TEMPERATURE D'UNE DENT D'UNE TELLE ROUE DENTEE CONNECTEE**
VERBUNDENES ZAHNRAD, VORRICHTUNG UND VERFAHREN ZUR ÜBERWACHUNG DER TEMPERATUR EINES ZAHNES EINES SOLCHEN ANGESCHLOSSENEN ZAHNRADES
CONNECTED TOOTHED WHEEL, DEVICE AND METHOD FOR MONITORING THE TEMPERATURE OF A TOOTH OF SUCH A CONNECTED TOOTHED WHEEL

(30) Priorité: 15.01.2020 FR 2000348
(43) Date de publication de la demande: 23.11.2022
(73) Titulaire: Fer'Incub, 52300 Vequeville (FR)
(72) Inventeur: CAHEN, Mathieu, 55140 RIGNY LA SALLE (FR)
(74) Mandataire: Cabinet Bleger-Rhein-Poupon
(86) Numéro de dépôt international: PCT/EP2020/087940
(87) Numéro de publication internationale: WO 2021/144135

(56) Documents cités:
- CN-A- 103 185 109
- CN-A- 103 438 183

## Description

La présente invention concerne une roue dentée connectée, un dispositif de contrôle à distance de la température d'une dent d'une telle roue dentée connectée et un procédé de contrôle à distance de la température d'une telle dent de roue dentée connectée.

L'invention concerne le domaine de la fabrication des mécanismes de transmission d'un mouvement de rotation. Sans n'y être aucunement limitée, la présente invention trouvera une application particulièrement appropriée dans le domaine des installations qui nécessitent la transmission, par l'intermédiaire d'un mécanisme de transmission du type engrenage, d'un effort de rotation dont la puissance est importante, notamment de l'ordre du mégawatt.

L'on connait, d'ores et déjà, des installations industrielles qui comportent, d'une part, un élément monté en rotation, d'autre part, un moteur pour l'entraînement en rotation de cet élément et, d'autre part, un mécanisme de transmission, qui est interposé entre ce moteur et cet élément, qui est configuré pour transmettre un mouvement de rotation entre ce moteur et cet élément, et qui comporte usuellement une roue dentée menante en prise avec ce moteur et une roue dentée menée en prise avec cet élément.

On connait, en particulier, des installations industrielles (notamment de broyage et/ou de calcination) qui comportent un élément, monté en rotation, adoptant la forme d'un tube tournant, et recevant, intérieurement, un matériau à broyer et/ou à calciner.

Une telle installation industrielle comporte, encore, un moteur d'entrainement en rotation de cet élément ainsi qu'un mécanisme de transmission d'un mouvement de rotation entre ce moteur et cet élément. Un tel mécanisme de transmission comporte, d'une part, une roue dentée menante, qui est en prise avec le moteur, qui est entraînée en rotation par ce moteur, et qui adopte la forme d'un pignon et, d'autre part, une roue dentée menée, qui coopère avec la roue dentée menante, qui équipe le tube tournant (plus particulièrement qui entoure ce tube tournant) et qui adopte la forme d'une couronne dentée.

Dans une telle installation, les pièces du mécanisme de transmission (plus particulièrement le pignon) sont sollicitées mécaniquement de manière très importante (plus particulièrement en raison de la transmission d'un effort de rotation dont la puissance est importante, notamment de l'ordre du mégawatt) de sorte que, pour garantir le bon fonctionnement de cette installation, il est nécessaire de surveiller un certain nombre de paramètres primordiaux au niveau de ces pièces.

Parmi ces paramètres, il est connu de surveiller la température d'au moins une des dents de l'une des roues dentées, plus particulièrement de la roue dentée menante (notamment du pignon). En fait, la surveillance d'une telle température permet d'identifier un dérèglement entre les pièces du mécanisme de transmission, plus particulièrement un défaut de parallélisme entre l'axe de la roue dentée menante et l'axe de la roue dentée menée. Un tel dérèglement entraîne une fatigue de contact entre ces roues dentées ce qui conduit à une usure prématurée et accélérée d'au moins une telle roue dentée (plus particulièrement de la roue dentée menée) et, ainsi, une détérioration du profil de la denture de cette roue dentée.

Pour surveiller la température d'une telle dent, il est connu de démonter le carter de protection du mécanisme d'entraînement et d'inspecter ce mécanisme d'entraînement avec une caméra thermique. Outre le fait que cette solution soit ponctuelle et ne permette pas de mesurer la température de manière continue, la mesure de température effectuée de cette manière est imprécise en raison des interférences environnementales (notamment générées par la présence de produits de lubrification) qui impactent l'émissivité des pièces du mécanisme de transmission.

Une alternative consiste à positionner des capteurs à infrarouge à proximité du mécanisme de transmission, notamment à l'intérieur du carter de protection de ce mécanisme. Ces capteurs permettent de contrôler la température de manière continue mais la mesure de la température est, là encore, imprécise en raison des interférences environnementales.

L'on connait, également et par le document CN103 438 183, un mécanisme de transmission qui comporte une roue dentée connectée, qui comporte une pluralité de dents, et qui présente un cercle de pied qui passe par la base de ces dents. Ces dents présentent, chacune, une tête de dent et des flancs de dent qui s'étendent à partir de cette tête et de part et d'autre de cette tête. Ces dents comportent, chacune, d'une part, une première rainure qui s'étend à partir de la tête de la dent et de manière radiale, d'autre part, une deuxième rainure qui est incurvée et qui s'étend à partir de la première rainure, de manière parallèle à l'un des flancs de la dent et jusqu'au cercle de pied et, d'autre part encore, une troisième rainure qui est incurvée et qui s'étend à partir de ladite première rainure, de manière parallèle à l'autre flanc de la dent, et jusqu'au cercle de pied. Cette deuxième rainure incurvée et cette troisième rainure incurvée comportent, intérieurement, un capteur de température ainsi que des moyens pour transmettre la température relevée par un tel capteur.

On observera que la roue dentée connectée décrite dans ce document CN103 438 183 est flexible de sorte qu'elle ne convient aucunement à un mécanisme de transmission qui doit transmettre un effort de rotation dont la puissance est importante. De plus, la deuxième rainure incurvée et la troisième rainure incurvée s'étendent dans une zone de la dent (entre la première rainure et le cercle de pied) soumise à de fortes contraintes et ont pour effet de fragiliser considérablement une telle dent.

La présente invention se veut de remédier aux inconvénients des roues dentées et des dispositifs de contrôle de l'état de la technique.

A cet effet, l'invention concerne une roue dentée connectée, qui présente un cercle primitif, et qui comporte, d'une part, une pluralité de dents, qui présentent, chacune, une tête de dent, et dont au moins une de ces dents comporte une rainure, qui débouche au niveau de la tête de ladite au moins une de ces dents, et qui s'étend à partir de la tête de ladite au moins une de ces dents et de manière radiale, d'autre part, au moins deux capteurs de température qui sont configurés pour relever la température et, d'autre part encore, des moyens de transmission pour transmettre au moins des données relatives aux températures relevées par lesdits au moins deux capteurs de température.

Cette roue dentée connectée est caractérisée par le fait que, d'une part, la rainure s'étend de manière longitudinale sur au moins une partie de la longueur de la tête de ladite au moins une des dents et au plus jusqu'au cercle primitif de la roue dentée connectée et, d'autre part, lesdits au moins deux capteurs de température sont localisés à l'intérieur de la rainure de ladite au moins une de ces dents.

Une autre caractéristique concerne le fait que la rainure s'étend sur l'intégralité de la longueur de la dent.

Encore une autre caractéristique consiste en ce que lesdits au moins deux capteurs de température sont localisés à l'intérieur de la rainure et sont répartis à l'intérieur de la rainure ainsi que sur l'intégralité de la longueur de cette rainure.

Encore une autre caractéristique concerne le fait que la roue dentée connectée comporte des moyens de détermination pour déterminer les températures d'un flanc de la dent qui comporte lesdits au moins deux capteurs de température, ceci à partir des températures relevées par lesdits au moins deux capteurs de température.

Une caractéristique additionnelle concerne le fait que la roue dentée connectée comporte au moins un capteur d'accélération du mouvement de la roue dentée connectée qui est configuré pour relever l'accélération du mouvement de la roue dentée connectée.

Encore une autre caractéristique concerne le fait que la roue dentée connectée comporte des moyens d'analyse pour analyser les températures relevées ou les températures déterminées du flanc de la dent ou l'accélération relevée du mouvement de la roue dentée connectée.

En fait, les moyens d'analyse sont configurés pour calculer un écart de température entre une température relevée par l'un desdits au moins deux capteurs de température et au moins une autre température relevée par au moins un autre desdits au moins deux capteurs de température tandis que les moyens de transmission sont configurés pour transmettre au moins lesdites données relatives aux températures relevées, ceci lorsque cet écart de température calculé est supérieur ou égal à une valeur déterminée.

De manière alternative ou additionnelle, les moyens d'analyse sont configurés pour calculer un écart de température entre une température du flanc de la dent déterminée à partir d'une température relevée par l'un desdits au moins deux capteurs de température et au moins une autre température du flanc de la dent déterminée à partir d'au moins une autre température relevée par au moins un autre desdits au moins deux capteurs de température tandis que les moyens de transmission sont configurés pour transmettre au moins lesdites données relatives aux températures relevées, ceci lorsque cet écart de température calculé est supérieur ou égal à une valeur déterminée.

L'invention concerne, encore, un dispositif de contrôle à distance de la température d'une dent d'une roue dentée connectée. Ce dispositif comporte, d'une part, une roue dentée connectée qui présente les caractéristiques décrites ci-dessus et, d'autre part, un système de contrôle de la température de la dent de la roue dentée connectée, ce système de contrôle est déporté par rapport à la roue dentée connectée et comporte, d'une part, des moyens de réception pour recevoir au moins les données relatives à la température relevée par lesdits au moins deux capteurs de température et, d'autre part, des moyens de contrôle de la température de la dent de la roue dentée connectée.

L'invention concerne, aussi, un dispositif de contrôle à distance de la température du flanc d'une dent d'une roue dentée connectée. Ce dispositif comporte, d'une part, une roue dentée connectée qui présente les caractéristiques décrites ci-dessus et qui comporte des moyens de transmission configurés pour transmettre au moins des données relatives aux températures déterminées du flanc de la dent et, d'autre part, un système de contrôle de la température du flanc de la dent de la roue dentée, ce système de contrôle est déporté par rapport à la roue dentée connectée et comporte, d'une part, des moyens de réception pour recevoir au moins les données relatives aux températures déterminées du flanc de la dent et, d'autre part, des moyens de contrôle de la température du flanc de la dent.

L'invention concerne, également, un procédé de contrôle à distance de la température d'une dent d'une roue dentée connectée. Ce procédé consiste en ce que, d'une part, on relève la température à l'aide d'au moins deux capteurs de température localisés à l'intérieur d'une rainure, que comporte la dent de la roue dentée connectée, qui débouche au niveau d'une tête que comporte cette dent, et qui s'étend radialement à partir de la tête de cette dent et au plus jusqu'au cercle primitif de la roue dentée connectée, d'autre part, on transmet des données relatives aux températures relevées, ceci à un système de contrôle déporté par rapport à la roue dentée connectée et, d'autre part encore et au niveau dudit système de contrôle déporté, on reçoit les données relatives aux températures relevées et on contrôle la température de la dent de la roue dentée connectée.

Finalement, l'invention concerne un procédé de contrôle à distance de la température du flanc d'une dent d'une roue dentée connectée. Ce procédé consiste en ce que, d'une part, on relève la température à l'aide d'au moins deux capteurs de température localisés à l'intérieur d'une rainure, que comporte la dent de la roue dentée connectée, qui débouche au niveau d'une tête que comporte cette dent, et qui s'étend radialement à partir de la tête de cette dent et au plus jusqu'au cercle primitif de la roue dentée connectée, d'autre part, on détermine des températures du flanc de la dent, ceci à partir des températures relevées par lesdits au moins deux capteurs de température et en tenant compte au moins du temps de diffusion de la chaleur et/ou de la perte de chaleur entre le flanc de la dent et lesdits au moins deux capteurs de température, d'autre part encore, on transmet des données relatives aux températures déterminées du flanc de la dent, ceci à un système de contrôle déporté par rapport à la roue dentée connectée et, d'autre part aussi et au niveau dudit système de contrôle déporté, on reçoit les données relatives aux températures déterminées du flanc de la dent de la roue dentée connectée et on contrôle la température du flanc de la dent de la roue dentée connectée.

Ainsi, l'invention concerne une roue dentée connectée dont au moins une des dents comporte une rainure qui s'étend de manière longitudinale sur au moins une partie de la longueur de la tête de ladite au moins une des dents (de préférence sur l'intégralité de cette longueur) et au plus jusqu'au cercle primitif de la roue dentée connectée.

Le fait qu'une telle rainure s'étende sur au moins une partie de la longueur de la tête de la dent permet, avantageusement, de positionner une pluralité de capteurs de température à l'intérieur d'une telle rainure ceci pour relever la température en différents points de la dent, notamment le long de cette dent (plus particulièrement sur l'intégralité de la longueur de cette dent). Ces relevés permettent, le cas échéant, de mettre en évidence au moins un point de la dent au niveau duquel la température diffère par rapport à au moins un autre point de cette dent, d'établir un profil de la température le long de cette dent (notamment le long de l'intégralité de la longueur de cette dent) ou encore de détecter une variation de la température le long de cette dent (notamment le long de l'intégralité de la longueur de cette dent). Ceci permet, avantageusement, d'identifier un désalignement de la roue dentée connectée par rapport à un élément denté entraîné par cette roue dentée connectée, voire de fournir une indication sur le plan dans lequel un tel désalignement est localisé.

Le fait que la rainure s'étende au plus jusqu'au cercle primitif de la roue permet de localiser une telle rainure dans une partie de la dent qui est peu ou faiblement soumise à des contraintes mécaniques ce qui permet, avantageusement, d'éviter d'endommager une telle dent et/ou lesdits au moins deux capteurs de température localisés à l'intérieur de cette rainure. Ceci permet, alors, de retarder la dégradation et/ou l'usure de la dent de la roue dentée connectée et desdits au moins deux capteurs de température mais également de la roue dentée connectée elle-même, ceci par rapport à une rainure plus profonde qui s'étend au-delà du cercle primitif.

La roue dentée connectée peut, également, comporter des moyens de détermination pour déterminer les températures d'un flanc de la dent dont la rainure contient lesdits au moins deux capteurs de température, ceci à partir de la température relevée par lesdits au moins deux capteurs de température. Cette caractéristique permet, avantageusement, de déterminer les températures, d'une part, en des endroits de la dent (à savoir au niveau d'un flanc de cette dent) au niveau desquels la roue dentée connectée est en contact avec une autre roue dentée (notamment que comporte une couronne et/ou qui est en prise avec un élément à entraîner en rotation) du mécanisme de transmission (qui comporte une telle roue dentée connectée) et, d'autre part, au moment de ce contact. Ceci permet, donc, de déterminer les températures en des endroits et à un moment où il est crucial de connaître ces températures afin de contrôler ces températures. Un tel contrôle permet, alors, de détecter un éventuel écart de température entre deux points de la dent ou du flanc de cette dent. Un tel écart de température permet, alors, de mettre en évidence une altération des caractéristiques de la roue dentée connectée (dégradation, usure) et/ou du mécanisme de transmission (dérèglement, désalignement, défaut de parallélisme) susceptible d'entraîner un dysfonctionnement de ce mécanisme de transmission à plus ou moins brève échéance. En mettant en évidence une telle altération, il est possible d'intervenir sur le mécanisme à titre préventif et/ou avant que les dégradations soient plus importantes et/ou avant l'apparition d'un dysfonctionnement et/ou à un moment qui ne gêne pas l'exploitation de l'installation équipée d'un tel mécanisme de transmission.

La roue dentée connectée peut, aussi, comporter au moins un capteur d'accélération du mouvement. La présence d'un tel capteur permet, avantageusement et au travers d'une analyse de l'accélération du mouvement relevée par un tel capteur, de détecter des vibrations et/ou des chocs, ceci avant que ceux-ci provoquent une dégradation (plus particulièrement une fissuration) de la roue dentée connectée.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

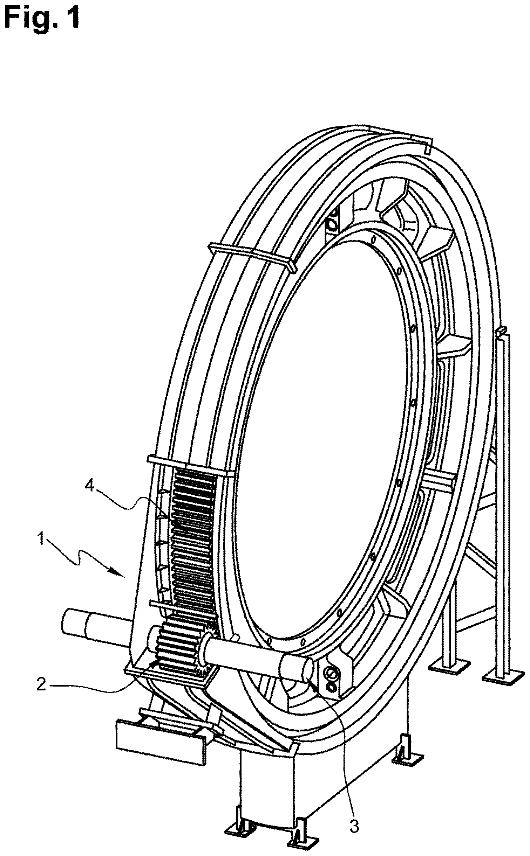

[Fig.1] représente une vue schématisée et en perspective d'un mécanisme de transmission qui comporte une roue dentée connectée conforme à l'invention.

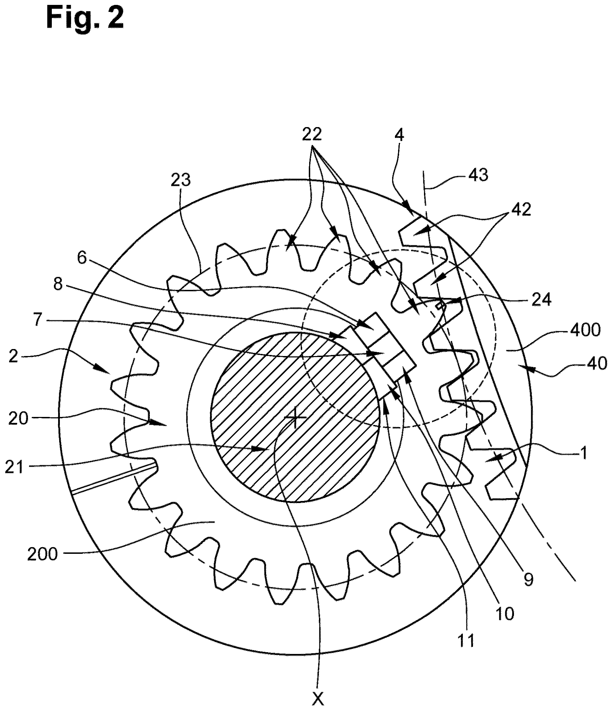

[Fig.2] représente une vue schématisée et de côté d'un détail du mécanisme de transmission illustré figure 1.
[Fig.3] représente une vue schématisée et en détail du mécanisme de transmission illustré figure 2.

L'invention concerne le domaine de la fabrication des mécanismes de transmission d'un mouvement de rotation.

Un tel mécanisme de transmission 1 comporte une roue dentée 2, qui est dite « menante », et qui est destinée à être entraînée en rotation par un moteur (non représenté), notamment par l'intermédiaire d'un arbre de transmission 3 qui est solidaire en rotation, d'une part, de la roue dentée menante 2 (qui, selon un mode de réalisation particulier, comporte un tel arbre de transmission 3) et, d'autre part, d'un rotor que comporte ce moteur. Une telle roue dentée menante 2 peut adopter la forme d'un pignon.

Ce mécanisme de transmission 1 comporte, également, une roue dentée 4, qui est dite « menée », qui coopère avec la roue dentée menante 2 pour son entraînement en rotation, et qui est destinée à entraîner en rotation un élément tournant (non représenté) qui est solidaire en rotation de cette roue dentée menée 4. Une telle roue dentée menée 4 peut adopter la forme d'une couronne qui entoure un tel élément tournant.

Une telle roue dentée (2 ; 4) est destinée à adopter un mouvement de rotation autour d'un axe de rotation X.

Une telle roue dentée (2 ; 4) comporte un corps (20 ; 40), d'une part, qui s'étend selon un plan perpendiculaire à l'axe de rotation X de ladite roue dentée (2 ; 4), d'autre part, qui peut adopter la forme d'un disque ou d'une couronne, et, d'autre part encore, qui présente, de part et d'autre, un flanc latéral (200 ; 400).

Une telle roue dentée (2 ; 4) peut, encore, comporter au moins un arbre 21 qui s'étend, d'une part, latéralement par rapport au corps (20 ; 40), plus particulièrement latéralement par rapport à au moins l'un des flancs latéraux (200 ; 400) de ce corps (20 ; 40) et, d'autre part, selon l'axe de rotation X de la roue dentée (2 ; 4). Cet arbre 21 est associé à l'arbre de transmission 3 mentionné ci-dessus ou constitue au moins une partie d'un tel arbre de transmission 3.

Une telle roue dentée (2 ; 4) comporte, également, une pluralité de dents (22 ; 42) qui sont régulièrement réparties et espacées sur le pourtour du corps (20 ; 40) de la roue dentée (2 ; 4).

Une telle dent (22 ; 42) présente, chacune, d'une part, une tête (220 ; 420) de dent (22 ; 42) et, d'autre part, deux flancs (221, 222 ; 421, 422) qui s'étendent, chacun, à partir de la tête (220 ; 420), ceci de part et d'autre de cette tête (220 ; 420).

Une telle roue dentée (2 ; 4) présente un cercle primitif (23 ; 43) qui est défini de telle sorte que l'ensemble des points du cercle primitif 23 de la roue dentée menante 2 et l'ensemble des points du cercle primitif 43 de la roue dentée menée 4 présentent une même vitesse tangentielle.

L'invention concerne, alors, une roue dentée connectée (2 ; 4) qui présente au moins les caractéristiques décrites ci-dessus.

Dans la suite de la description et sur les figures en annexe, il sera, essentiellement, fait référence à une roue dentée connectée (2 ; 4) qui constitue une roue dentée menante 2 (plus particulièrement constituée par un pignon) sachant que la présente invention n'y est aucunement limitée et qu'une telle roue dentée connectée (2 ; 4) peut, également, constituer une roue dentée menée 4 (plus particulièrement constituée par une couronne).

Une telle roue dentée connectée 2 comporte, alors, une pluralité de dents 22 dont au moins une de ces dents 22 comporte une rainure 24, qui débouche au niveau de la tête 220 de ladite au moins une de ces dents 22, et qui s'étend à partir de la tête 220 de ladite au moins une de ces dents 22 et de manière radiale.

Selon l'invention, la rainure 24 s'étend de manière longitudinale sur au moins une partie de la longueur de la tête 220 de ladite au moins une des dents 22.

Selon un mode de réalisation préféré, ladite rainure 24 s'étend sur l'intégralité de la longueur de la dent 22.

De plus, ladite rainure 24 s'étend au plus jusqu'au cercle primitif 23 de la roue dentée connectée 2.

Une autre caractéristique concerne le fait que ladite rainure 24 est linéaire et s'étend selon un axe qui peut être parallèle à l'axe de rotation X de la roue dentée connectée 2.

Ladite roue dentée connectée 2 comporte, également, au moins deux capteurs de température 5, qui sont localisés à l'intérieur de la rainure 24 de ladite au moins une de ces dents 22, et qui sont configurés pour relever la température.

Selon un mode de réalisation préféré, lesdits au moins deux capteurs de température 5 sont alignés selon au moins une ligne qui est au moins parallèle à (voire confondue avec) l'axe selon lequel s'étend cette rainure 24 et/ou sont régulièrement espacés le long d'une telle ligne.

En fait, lesdits au moins deux capteurs de température 5 sont répartis (de préférence régulièrement) à l'intérieur de la rainure 24 ainsi que sur l'intégralité de la longueur de cette rainure 24. Ceci permet, avantageusement, de relever la température en différents points de la dent 22 (ceci le long de la rainure 24 et, donc, le long de la dent 22) et, le cas échéant, de mettre en évidence un point de la dent 22 au niveau duquel la température diffère par rapport à autre point de cette dent 22.

Lorsque la rainure 24 s'étend sur l'intégralité de la longueur de la dent 22, lesdits au moins deux capteurs de température 5 sont, de préférence, répartis (de préférence régulièrement) sur l'intégralité de la longueur de la rainure 24 et, donc, sur l'intégralité de la longueur de la dent 22. Ceci permet, avantageusement, de relever la température en différents points de la dent 22 (ceci le long de l'intégralité de la rainure 24 et, donc, le long de l'intégralité de la dent 22) et, le cas échéant, de mettre en évidence un point de la dent 22 au niveau duquel la température diffère par rapport à autre point de cette dent 22.

En fait, un tel capteur de température 5 peut être constitué par un thermocouple et/ou être en contact avec au moins une paroi de la rainure 24.

Une autre caractéristique concerne le fait que la roue dentée connectée 2 comporte, aussi, au moins une carte de circuit imprimé, qui comporte lesdits au moins deux capteurs de température 5, et qui est localisée à l'intérieur de la rainure 24.

En fait, une telle carte de circuit imprimé comporte une plaque sur laquelle sont montés (plus particulièrement rapportés) au moins une partie desdits au moins deux capteurs de température 5.

Dans le cas d'une roue dentée connectée 2 comportant une pluralité de capteurs de température 5, la carte de circuit imprimé comporte une pluralité (voire l'ensemble) de ces capteurs de température 5 qui sont montés (de préférence, rapportés) sur une plaque que comporte cette carte de circuit imprimé.

Finalement, la rainure 24 est au moins en partie (voire, et de préférence, intégralement) comblée par un matériau (de préférence une résine), qui ne génère pas d'interférence lors du relevé de la température par les capteurs de température 5, qui est résistant à l'environnement de la roue dentée connectée 2 (notamment à la température et/ou au lubrifiant), et qui est stable dimensionnellement lors des variations de température du mécanisme de transmission 1.

Encore une autre caractéristique concerne le fait que la roue dentée connectée 2 comporte, aussi, des moyens de transmission 6 pour transmettre au moins des données relatives à la température relevée par lesdits au moins deux capteurs de température 5.

Selon une autre caractéristique, la roue dentée connectée 2 comporte des moyens de détermination 7 pour déterminer les températures d'un flanc (221 ; 222) de la dent 22 qui comporte lesdits au moins deux capteurs de température 5, ceci à partir de la température relevée par lesdits au moins deux capteurs de température 5.

Ces moyens de détermination 7 sont, plus particulièrement, configurés pour déterminer les températures d'un tel flanc (221 ; 222), d'une part, à partir de la température relevée par lesdits au moins deux capteurs de température 5 et, d'autre part, en tenant compte au moins du temps de diffusion de la chaleur et/ou de la perte de chaleur entre le flanc (221 ; 222) de la dent 22 et lesdits au moins deux capteurs de température 5.

Quoi qu'il en soit, de tels moyens de détermination 7 peuvent être constitués au moins en partie par un logiciel et/ou par un programme.

Une autre caractéristique concerne le fait que la roue dentée connectée 2 comporte au moins un capteur d'accélération du mouvement 8 de la roue dentée connectée 2, ledit au moins un capteur d'accélération du mouvement 8 étant configuré pour relever l'accélération du mouvement de la roue dentée connectée 2.

Un tel capteur d'accélération du mouvement 8 permet de détecter des vibrations et/ou des chocs. Un tel capteur d'accélération du mouvement 8 peut être constitué par un accéléromètre.

Encore une autre caractéristique concerne le fait que la roue dentée connectée 2 comporte des moyens d'analyse 9 pour analyser les températures relevées (par lesdits au moins deux capteurs de température 5) et/ou les températures déterminées (par les moyens de détermination 7) du flanc (221 ; 222) de la dent 22 (comportant lesdits au moins deux capteurs de température 5) et/ou l'accélération relevée (par ledit au moins un capteur d'accélération du mouvement 8) du mouvement de la roue dentée connectée 2.

A ce propos, il convient d'observer que ces moyens d'analyse 9 sont configurés pour calculer un écart de température entre, d'une part, une température relevée par l'un desdits au moins deux capteurs de température 5 et, d'autre part, au moins une autre température relevée par au moins un autre desdits au moins deux capteurs de température 5.

Les moyens de transmission 6 peuvent, alors, être configurés pour transmettre au moins lesdites données relatives aux températures relevées, ceci lorsque cet écart de température calculé est supérieur ou égal à une valeur déterminée, notamment une valeur seuil.

En fait et selon un mode de réalisation préféré, ces moyens de transmission 6 sont configurés pour transmettre au moins lesdites données relatives aux températures relevées uniquement lorsque cet écart de température calculé est supérieur ou égal à une valeur déterminée, notamment une valeur seuil. Ces moyens de transmission 6 sont, alors, avantageusement, configurés pour transmettre des données uniquement en cas d'anomalie, ce qui permet de réduire la consommation d'énergie (fournie aux moyens de transmission par des moyens d'alimentation en énergie que comporte la roue dentée connectée 2) des moyens de transmission, ceci par rapport à des moyens de transmission qui transmettent des données de manière continue.

De manière alternative ou (et de préférence) additionnelle, les moyens d'analyse 9 sont configurés pour calculer un écart de température entre, d'une part, une température du flanc (221 ; 222) de la dent 22 déterminée à partir d'une température relevée par l'un desdits au moins deux capteurs de température 5 et, d'autre part, au moins une autre température du flanc (221 ; 222) de la dent 22 déterminée à partir d'au moins une autre température relevée par au moins un autre desdits au moins deux capteurs de température 5.

Les moyens de transmission 6 sont, alors, configurés pour transmettre au moins lesdites données relatives aux températures relevées (qui, en l'espèce, sont constituées par des données relatives aux températures du flanc 221 ; 222 de la dent 22 déterminées à partir de ces températures relevées), ceci lorsque cet écart de température calculé est supérieur ou égal à une valeur déterminée, notamment une valeur seuil.

Là encore et selon un mode de réalisation préféré, ces moyens de transmission 6 sont configurés pour transmettre au moins lesdites données relatives aux températures relevées (qui, en l'espèce, sont constituées par des données relatives aux températures du flanc 221 ; 222 de la dent 22 déterminées à partir de ces températures relevées), uniquement lorsque cet écart de température calculé est supérieur ou égal à une valeur déterminée notamment une valeur seuil. Là encore, ces moyens de transmission 6 sont, alors, avantageusement, configurés pour transmettre des données uniquement en cas d'anomalie. Ceci permet de réduire la consommation d'énergie tel que mentionné ci-dessus.

De manière alternative ou (et de préférence) additionnelle, ces moyens d'analyse 9 peuvent, encore, être constitués par des moyens de comparaison d'une accélération du mouvement relevée (par ledit au moins un capteur d'accélération du mouvement 8) avec une valeur d'accélération de consigne tandis que les moyens de transmission 7 peuvent, alors, être configurés pour transmettre des données relatives à l'accélération relevée en cas dépassement ou d'égalisation de la valeur d'accélération de consigne.

De manière alternative ou (et de préférence) additionnelle, les moyens d'analyse 9 peuvent être configurés pour comparer une valeur d'accélération du mouvement relevée par ledit au moins un capteur d'accélération du mouvement 8 et une valeur seuil d'accélération du mouvement. Les moyens de transmission 6 peuvent, alors, être configurés pour transmettre des données relatives à au moins une telle accélération du mouvement, ceci (et, de préférence, uniquement) lorsque la valeur d'accélération du mouvement relevée atteint ou dépasse la valeur seuil d'accélération du mouvement.

Quoi qu'il en soit, de tels moyens d'analyse 9 peuvent être constitués au moins en partie par un logiciel et/ou par un programme.

Encore une autre caractéristique concerne le fait que la roue dentée connectée 2 comporte des moyens d'enregistrement 10 pour enregistrer les températures relevées (par lesdits au moins deux capteurs de température 5) et/ou les températures déterminées (par les moyens de détermination 7) du flanc (221 ; 222) de la dent 22 (comportant lesdits au moins deux capteurs de température 5) et/ou l'accélération relevée (relevées par ledit au moins un capteur d'accélération du mouvement 8) du mouvement de la roue dentée 2 et/ou l'analyse des températures relevées et/ou des températures déterminées et/ou de l'accélération relevée du mouvement.

Ces moyens d'enregistrement 10 peuvent, encore, être configurés pour enregistrer les valeurs déterminées (notamment les valeurs seuil) des écarts de température (entre les températures relevées ou les températures déterminées) et/ou la valeur seuil d'accélération du mouvement.

Tel que mentionné ci-dessus, la roue dentée connectée 2 comporte des moyens de transmission 6 pour transmettre au moins des données relatives aux températures relevées par lesdits au moins deux capteurs de température 5.

A ce propos, on observera que ces moyens de transmission 6 d'au moins des données relatives aux températures relevées sont configurés pour transmettre des données constituées par les températures relevées (par lesdits au moins deux capteurs de température 5), par les températures déterminées (par les moyens de détermination 7) du flanc (221 ; 222) de la dent 22 (comportant lesdits au moins deux capteurs de température 5), par une analyse des températures relevées (ceci tel que susmentionné) et/ou par un analyse des températures déterminées (ceci tel que susmentionné), et/ou par un enregistrement des températures relevées et/ou des températures déterminées et/ou d'une analyse de ces températures.

De manière alternative ou (et de préférence) additionnelle, ces moyens de transmission 6 d'au moins des données relatives aux températures relevées peuvent, encore, être configurés pour transmettre des données relatives à l'accélération du mouvement de la roue dentée connectée 2. Ces données peuvent, alors, être constituées par l'accélération relevée (par ledit au moins un capteur d'accélération du mouvement 8) du mouvement de la roue dentée connectée 2, par une analyse de l'accélération relevée du mouvement (comme mentionné ci-dessus) et/ou par un enregistrement de cette accélération relevée du mouvement et/ou d'une analyse de cette accélération relevée du mouvement.

Tel que mentionné ci-dessus, la roue dentée connectée 2 comporte un arbre 21. C'est, plus particulièrement, sur cet arbre 21 que sont montés (plus particulièrement rapportés) les moyens de transmission 6 et/ou les moyens de détermination 7 et/ou ledit au moins un capteur d'accélération du mouvement 8 et/ou les moyens d'analyse 9 et/ou les moyens d'enregistrement 10.

De manière alternative, la roue dentée connectée 2 comporte au moins un logement (notamment sous la forme gorge, de préférence annulaire) à l'intérieur duquel sont logés les moyens de transmission 6 et/ou les moyens de détermination 7 et/ou ledit au moins un capteur d'accélération du mouvement 8 et/ou les moyens d'analyse 9 et/ou les moyens d'enregistrement 10.

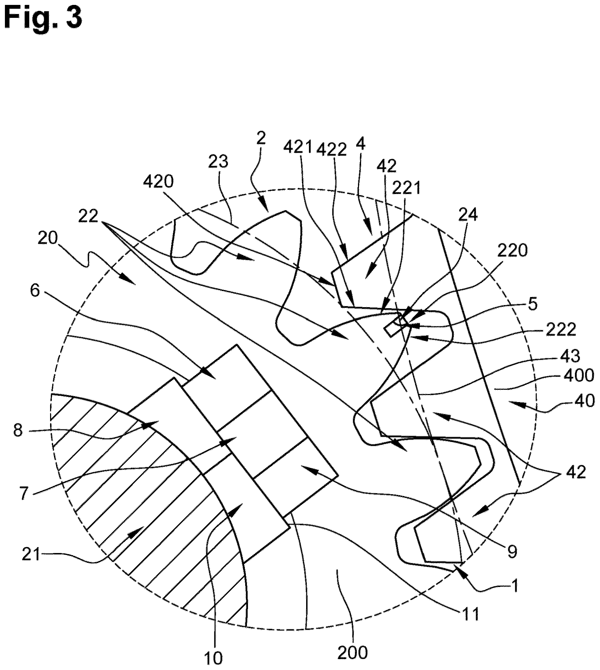

Tel que visible sur la figure 3, la roue dentée connectée 2 comporte un boîtier 11, d'une part, qui est rapporté sur l'arbre 21 susmentionné ou localisé à l'intérieur du logement susmentionné et, d'autre part, qui intègre au moins les moyens de transmission 6 et/ou les moyens de détermination 7 et/ou ledit au moins un capteur d'accélération du mouvement 8 et/ou les moyens d'analyse 9 et/ou les moyens d'enregistrement 10.

Encore une autre caractéristique concerne le fait que la roue dentée connectée 2 comporte des moyens de raccordement de type filaire pour raccorder, d'une part, au moins une partie desdits au moins deux capteurs de température 5 (voire l'ensemble desdits capteurs de température 5) et, d'autre part, lesdits moyens de transmission 6 et/ou les moyens de détermination 7 et/ou les moyens d'analyse 9 et/ou les moyens d'enregistrement 10.

L'invention concerne, également, un dispositif de contrôle (plus particulièrement en continu) à distance de la température d'une dent 22 d'une roue dentée connectée 2.

Ce dispositif de contrôle comporte, d'une part, une roue dentée connectée 2 qui présente au moins une partie des caractéristiques décrites ci-dessus, plus particulièrement ladite au moins une rainure 24, lesdits au moins deux capteurs de température 5 et lesdits moyens de transmission 6, voire encore lesdits moyens d'analyse 9 et/ou lesdits moyens d'enregistrement 10.

Dans ce dispositif de contrôle, les moyens de transmission 6 sont configurés pour transmettre au moins des données (telles que décrites ci-dessus, à savoir les températures relevées, l'analyse de ces températures relevées et/ou l'enregistrement des températures relevées ou de leur analyse) relatives aux températures relevées (par lesdits au moins deux capteurs de température 5) de la dent 22.

D'autre part, ce dispositif de contrôle comporte un système de contrôle de la température de la dent 22 de la roue dentée connectée 2. Ce système de contrôle est déporté par rapport à la roue dentée connectée 2 et comporte, d'une part, des moyens de réception pour recevoir au moins les données (telles que décrites ci-dessus) relatives aux températures relevées par lesdits au moins deux capteurs de température 5 et, d'autre part, des moyens de contrôle de la température de la dent 22 de la roue dentée connectée 2.

Un tel système de contrôle peut, encore, comporter des moyens de signalisation et/ou de visualisation d'un écart de température entre, d'une part, une température relevée par l'un desdits au moins deux capteurs de température 5 et, d'autre part, au moins une autre température relevée par au moins un autre desdits au moins deux capteurs de température 5, ceci lorsque cet écart de température est supérieur ou égal à une valeur déterminée, notamment à une valeur seuil.

De manière alternative ou (et, de préférence) additionnelle, le système de contrôle peut, encore comporter des moyens de signalisation et/ou de visualisation d'au moins une information relative à un tel écart de température, ceci lorsque cet écart de température est supérieur ou égal à une valeur déterminée, notamment à une valeur seuil.

A ce propos, on observera que le système de contrôle peut être constitué par un ordinateur tandis que les moyens de contrôle peuvent être constitués par un logiciel ou un programme que comporte cet ordinateur alors que les moyens de signalisation et/ou de visualisation peuvent être constitués par l'écran d'un tel ordinateur.

L'invention concerne, aussi, un dispositif de contrôle (plus particulièrement en continu) à distance de la température du flanc (221 ; 222) d'une dent 22 d'une roue dentée connectée 2.

Ce dispositif de contrôle comporte, alors, d'une part, une roue dentée connectée 2 qui présente au moins une partie des caractéristiques décrites ci-dessus, plus particulièrement ladite au moins une rainure 24, lesdits au moins deux capteurs de température 5, lesdits moyens de transmission 6 et lesdits moyens de détermination 7, voire encore lesdits moyens d'analyse 9 et/ou lesdits moyens d'enregistrement 10.

Dans ce dispositif de contrôle, les moyens de transmission 6 sont configurés pour transmettre au moins des données (telles que décrites ci-dessus, à savoir les températures déterminées, l'analyse de ces températures déterminées et/ou l'enregistrement de ces températures déterminées ou de leur analyse) relatives aux températures déterminées (par les moyens de détermination 7) du flanc (221 ; 222) de la dent 22.

D'autre part, ce dispositif de contrôle comporte un système de contrôle de la température du flanc (221 ; 222) de la dent 22 de la roue dentée 2. Ce système de contrôle est déporté par rapport à la roue dentée connectée 2 et comporte, d'une part, des moyens de réception pour recevoir au moins les données (telles que décrites ci-dessus) relatives aux températures déterminées (par les moyens de détermination 7) du flanc (221 ; 222) de la dent 22 et, d'autre part, des moyens de contrôle de la température du flanc (221 ; 222) de la dent 22.

Le système de contrôle peut, encore, comporter des moyens de signalisation et/ou de visualisation d'un écart de température entre, d'une part, une température du flanc (221 ; 222) d'une dent 22 déterminée par les moyens de détermination 7 à partir d'une température relevée par l'un desdits au moins deux capteurs de température 5 et, d'autre part, au moins une autre température du flanc (221 ; 222) de la dent 22 déterminée par les moyens de détermination 7 à partir d'au moins une autre température relevée par au moins un autre desdits au moins deux capteurs de température 5, ceci lorsque cet écart de température est supérieur ou égal à une valeur déterminée, notamment à une valeur seuil.

De manière alternative ou (et, de préférence) additionnelle, le système de contrôle peut, encore, comporter des moyens de signalisation et/ou de visualisation d'au moins une information relative à un tel écart de température, ceci lorsque cet écart de température est supérieur ou égal à une valeur déterminée, notamment à une valeur seuil.

A ce propos, on observera que, là encore, le système de contrôle peut être constitué par un ordinateur tandis que les moyens de contrôle peuvent être constitués par un logiciel ou un programme que comporte cet ordinateur alors que les moyens de signalisation et/ou de visualisation peuvent être constitués par l'écran d'un tel ordinateur.

L'invention peut, encore, concerner un dispositif de contrôle (plus particulièrement en continu) à distance de l'accélération du mouvement d'une roue dentée connectée 2.

Ce dispositif de contrôle comporte, alors, d'une part, une roue dentée connectée 2 qui présente au moins une partie des caractéristiques décrites ci-dessus, plus particulièrement ledit au moins un capteur d'accélération du mouvement 8 de la roue dentée connectée 2, lesdits moyens de transmission 6, voire encore lesdits moyens d'analyse 9 et/ou lesdits moyens d'enregistrement 10.

Dans ce dispositif de contrôle, les moyens de transmission 6 sont configurés pour transmettre au moins des données (telles que décrites ci-dessus, à savoir l'accélération relevée du mouvement de la roue dentée connectée 2, l'analyse d'une telle accélération relevée et/ou l'enregistrement d'une telle accélération relevée ou de son analyse) relatives à l'accélération du mouvement de la dent 22 relevée.

D'autre part, ce dispositif de contrôle comporte un système de contrôle de l'accélération du mouvement de la roue dentée 2. Ce système de contrôle est déporté par rapport à la roue dentée connectée 2 et comporte, d'une part, des moyens de réception pour recevoir au moins les données (telles que décrites ci-dessus) relatives à l'accélération relevée du mouvement de la roue dentée connectée 2 et, d'autre part, des moyens de contrôle de cette accélération du mouvement.

Le système de contrôle peut, encore, comporter des moyens de signalisation et/ou de visualisation du fait que la valeur seuil d'accélération du mouvement de la roue dentée 2 est atteinte ou dépassée, ceci par la valeur d'accélération du mouvement relevée par ledit au moins un capteur d'accélération du mouvement 8.

De manière alternative ou (et, de préférence) additionnelle, le système de contrôle peut, encore, comporter des moyens de signalisation et/ou de visualisation d'au moins une information relative au fait que cette valeur seuil d'accélération du mouvement est atteinte ou dépassée, ceci par la valeur d'accélération du mouvement relevée par ledit au moins un capteur d'accélération du mouvement 8.

A ce propos, on observera que, là encore, le système de contrôle peut être constitué par un ordinateur tandis que les moyens de contrôle peuvent être constitués par un logiciel ou un programme que comporte cet ordinateur alors que les moyens de signalisation et/ou de visualisation peuvent être constitués par l'écran d'un tel ordinateur.

L'invention concerne, également, un procédé de contrôle (plus particulièrement en continu) à distance de la température d'une dent 22 d'une roue dentée connectée 2.

Ce procédé de contrôle consiste en ce que, d'une part, on relève la température à l'aide d'au moins deux capteurs de température 5 localisés à l'intérieur d'une rainure 24 (telle que décrite ci-dessus), que comporte la dent 22 de la roue dentée connectée 2, qui débouche au niveau d'une tête 220 que comporte cette dent 22, et qui s'étend radialement à partir de la tête 220 de cette dent 22 et au plus jusqu'au cercle primitif 23 de la roue dentée connectée 2, d'autre part, on transmet des données (telles que décrites ci-dessus) relatives aux températures relevées (par lesdits au moins deux capteurs de température 5), ceci à un système de contrôle déporté par rapport à la roue dentée connectée 2 et, d'autre part encore et au niveau dudit système de contrôle déporté, on reçoit les données relatives aux températures relevées et on contrôle la température de la dent 22 de la roue dentée connectée 2.

A ce propos, on observera que, lorsqu'on transmet des données relatives aux températures relevées, on transmet les températures relevées par lesdits au moins deux capteurs de température 5, une analyse de telles températures relevées (plus particulièrement un écart de température supérieur ou égal à une valeur seuil déterminée et/ou une information relative à un tel écart de température, ceci tel que décrit ci-dessus) et/ou un enregistrement de telles températures relevées ou de leur analyse.

On observera, également que, lorsqu'on contrôle la température de la dent 22 de la roue dentée connectée 2, on visualise et/ou on signale un écart de température entre, d'une part, une température relevée par l'un desdits au moins deux capteurs de température 5 et, d'autre part, au moins une autre température relevée par au moins un autre desdits au moins deux capteurs de température 5, ceci lorsque cet écart de température est supérieur ou égal à une valeur déterminée, notamment à une valeur seuil.

De manière alternative ou (et, de préférence) additionnelle, lorsqu'on contrôle la température de la dent 22 de la roue dentée connectée 2, on visualise et/ou on signale au moins une information relative à un tel écart de température, ceci lorsque cet écart de température est supérieur ou égal à une valeur déterminée, notamment à une valeur seuil.

On observera que le procédé de contrôle de la température de la dent 22 de la roue dentée connectée 2 peut, avantageusement, être mis en oeuvre par le dispositif de contrôle de la température d'une dent mentionné ci-dessus.

L'invention concerne, encore, un procédé de contrôle (plus particulièrement en continu) à distance de la température du flanc (221 ; 222) d'une dent 22 d'une roue dentée connectée 2.

Ce procédé consiste en ce que, d'une part, on relève la température à l'aide d'au moins deux capteurs de température 5 localisés à l'intérieur d'une rainure 24 (telle que décrite ci-dessus), que comporte la dent 22 de la roue dentée connectée 2, qui débouche au niveau d'une tête 220 que comporte cette dent 22, et qui s'étend radialement à partir de la tête 220 de cette dent 22 et au plus jusqu'au cercle primitif 23 de la roue dentée connectée 2. D'autre part, on détermine des températures du flanc (221 ; 222) de la dent 22, ceci à partir des températures relevées par lesdits au moins deux capteurs de température 5 et en tenant compte au moins du temps de diffusion de la chaleur et/ou de la perte de chaleur entre le flanc (221 ; 222) de la dent 22 et lesdits au moins deux capteurs de température 5. D'autre part encore, on transmet des données relatives aux températures déterminées du flanc (221 ; 222) de la dent 22, ceci à un système de contrôle déporté par rapport à la roue dentée connectée 2 et, d'autre part aussi et au niveau dudit système de contrôle déporté, on reçoit les données relatives aux températures déterminées du flanc (221 ; 222) de la dent 22 de la roue dentée connectée 2 et on contrôle la température du flanc (221 ; 222) de la dent 22 de la roue dentée connectée 2.

A ce propos, on observera que, lorsqu'on détermine les températures du flanc (221 ; 222) de la dent 22 à partir des températures relevées par lesdits au moins deux capteurs de température 5, on détermine ces températures déterminées par l'intermédiaire des moyens de détermination 7 mentionnés ci-dessus et/ou de la manière décrite ci-dessus.

De plus, lorsqu'on transmet des données relatives aux températures déterminées, on transmet les températures déterminées par les moyens de détermination 7, une analyse de telles températures déterminées (plus particulièrement un dépassement ou une égalisation, par un écart de température calculé, d'une valeur déterminée d'écart de température, ceci tel que décrit ci-dessus) et/ou un enregistrement d'une telle température déterminée ou de son analyse

On observera, également que, lorsqu'on contrôle la température du flanc (221 ; 222) de la dent 22 de la roue dentée connectée 2, on visualise et/ou on signale un écart de température entre, d'une part, une température du flanc (221 ; 222) d'une dent 22 déterminée par les moyens de détermination 7 à partir d'une température relevée par l'un desdits au moins deux capteurs de température 5 et, d'autre part, au moins une autre température du flanc (221 ; 222) de la dent 22 déterminée par les moyens de détermination 7 à partir d'au moins une autre température relevée par au moins un autre desdits au moins deux capteurs de température 5, ceci lorsque cet écart de température est supérieur ou égal à une valeur déterminée, notamment à une valeur seuil.

De manière alternative ou (et, de préférence) additionnelle, lorsqu'on contrôle la température du flanc (221 ; 222) de la dent 22 de la roue dentée connectée 2, on visualise et/ou on signale au moins une information relative à un tel écart de température, ceci lorsque cet écart de température est supérieur ou égal à une valeur déterminée, notamment à une valeur seuil.

Finalement, on observera que le procédé de contrôle de la température du flanc (221 ; 222) de la dent 22 de la roue dentée connectée 2 peut, avantageusement, être mis en oeuvre par le dispositif de contrôle de la température du flanc (221 ; 222) d'une dent 22 d'une roue dentée connectée 2 décrit ci-dessus.

L'invention concerne, aussi, un procédé de contrôle (plus particulièrement en continu) à distance de l'accélération du mouvement d'une roue dentée connectée 2.

Ce procédé de contrôle consiste en ce que on relève l'accélération du mouvement de la roue dentée connectée 2 à l'aide d'au moins un capteur d'accélération du mouvement 8 de la roue dentée connectée 2 (tel que décrit ci-dessus), d'autre part, on transmet des données relatives à l'accélération relevée du mouvement de la roue dentée connectée 2, ceci à un système de contrôle déporté par rapport à la roue dentée connectée 2 et, d'autre part encore et au niveau dudit système de contrôle déporté, on reçoit les données relatives à l'accélération relevée du mouvement et on contrôle l'accélération du mouvement de la roue dentée connectée 2.

A ce propos, on observera que, lorsqu'on transmet des données relatives à l'accélération du mouvement de la roue dentée connectée 2, on transmet l'accélération du mouvement relevée par ledit au moins un capteur d'accélération du mouvement 8, une analyse d'une telle accélération du mouvement (plus particulièrement un dépassement ou une égalisation, par l'accélération du mouvement relevée, d'une valeur d'accélération de consigne ou d'une valeur seuil d'accélération et/ou une information relative à un tel dépassement ou à une telle égalisation) et/ou un enregistrement d'une telle accélération relevée du mouvement ou de son analyse.

On observera, également, que, lorsqu'on contrôle l'accélération du mouvement de la roue dentée connectée 2, on visualise et/ou on signale le fait que la valeur seuil d'accélération du mouvement de la roue dentée 2 est atteinte ou dépassée, ceci par la valeur d'accélération du mouvement relevée par ledit au moins un capteur d'accélération du mouvement 8.

De manière alternative ou (et, de préférence) additionnelle, lorsqu'on contrôle l'accélération du mouvement de la roue dentée connectée 2, on visualise et/ou on signale, une information relative au fait que cette valeur seuil d'accélération du mouvement est atteinte ou dépassée, ceci par la valeur d'accélération du mouvement relevée par ledit au moins un capteur d'accélération du mouvement 8.

Finalement, on observera que le procédé de contrôle de l'accélération du mouvement de la roue dentée connectée 2 peut, avantageusement, être mis en oeuvre par le dispositif de contrôle de l'accélération du mouvement d'une roue dentée connectée 2 décrit ci-dessus.

## Revendications

1. Roue dentée connectée (2), qui présente un cercle primitif (23), et qui comporte, d'une part, une pluralité de dents (22), qui présentent, chacune, une tête (220) de dent (22), et dont au moins une de ces dents (22) comporte une rainure (24), qui débouche au niveau de la tête (220) de ladite au moins une de ces dents (22), et qui s'étend à partir de la tête (220) de ladite au moins une de ces dents (22) et de manière radiale, d'autre part, au moins deux capteurs de température (5) qui sont configurés pour relever la température et, d'autre part encore, des moyens de transmission (6) pour transmettre au moins des données relatives aux températures relevées par lesdits au moins deux capteurs de température (5), **caractérisée par le fait que**, d'une part, la rainure (24) s'étend de manière longitudinale sur au moins une partie de la longueur de la tête (220) de ladite au moins une des dents (22) et au plus jusqu'au cercle primitif (23) de la roue dentée connectée (2) et, d'autre part, lesdits au moins deux capteurs de température (5) sont localisés à l'intérieur de la rainure (24) de ladite au moins une de ces dents (22).

2. Roue dentée connectée (2) selon la revendication 1, **caractérisée par le fait que** la rainure (24) s'étend sur l'intégralité de la longueur de la dent (22).

3. Roue dentée connectée (2) selon l'une quelconque des revendications précédentes, **caractérisée par le fait que** lesdits au moins deux capteurs de température (5) sont répartis à l'intérieur de la rainure (24) ainsi que sur l'intégralité de la longueur de cette rainure (24).

4. Roue dentée connectée (2) selon l'une quelconque des revendications précédentes, **caractérisée par le fait qu'**elle comporte des moyens de détermination (7) pour déterminer les températures d'un flanc (221 ; 222) de la dent (22) qui comporte lesdits au moins deux capteurs de température (5), ceci à partir des températures relevées par lesdits au moins deux capteurs de température (5).

5. Roue dentée connectée (2) selon l'une quelconque des revendications précédentes, **caractérisée par le fait qu'**elle comporte au moins un capteur d'accélération du mouvement (8) de la roue dentée connectée (2) qui est configuré pour relever l'accélération du mouvement de la roue dentée connectée (2).

6. Roue dentée connectée (2) selon, respectivement, la revendication 1 ou 4 ou 5, **caractérisée par le fait qu'**elle comporte des moyens d'analyse (9) pour analyser, respectivement, les températures relevées ou les températures déterminées du flanc (221 ; 222) de la dent (22) ou l'accélération relevée du mouvement de la roue dentée connectée (2).

7. Roue dentée connectée (2) selon la revendication 6, **caractérisée par le fait que**, d'une part, les moyens d'analyse (9) sont configurés pour calculer un écart de température entre une température relevée par l'un desdits au moins deux capteurs de température (5) et au moins une autre température relevée par au moins un autre desdits au moins deux capteurs de température (5) et, d'autre part, les moyens de transmission (6) sont configurés pour transmettre au moins lesdites données relatives aux températures relevées, ceci lorsque cet écart de température calculé est supérieur ou égal à une valeur déterminée.

8. Roue dentée connectée (2) selon les revendications 4 et 6, **caractérisée par le fait que**, d'une part, les moyens d'analyse (9) sont configurés pour calculer un écart de température entre une température du flanc (221 ; 222) de la dent (22) déterminée à partir d'une température relevée par l'un desdits au moins deux capteurs de température (5) et au moins une autre température du flanc (221 ; 222) de la dent (22) déterminée à partir d'au moins une autre température relevée par au moins un autre desdits au moins deux capteurs de température (5) et, d'autre part, les moyens de transmission (6) sont configurés pour transmettre au moins lesdites données relatives aux températures relevées, ceci lorsque cet écart de température calculé est supérieur ou égal à une valeur déterminée.

9. Roue dentée connectée (2) selon les revendications 5 et 6, **caractérisée par le fait que**, d'une part, les moyens d'analyse (9) sont configurés pour comparer une valeur d'accélération du mouvement relevée par ledit au moins un capteur d'accélération du mouvement (8) et une valeur seuil d'accélération du mouvement et, d'autre part, les moyens de transmission (6) sont configurés pour transmettre des données relatives à au moins une telle accélération du mouvement, ceci lorsque la valeur d'accélération du mouvement relevée atteint ou dépasse la valeur seuil.

10. Roue dentée connectée (2) selon, respectivement, la revendication 1 ou 4 ou 5 ou 6, **caractérisée par le fait qu'**elle comporte un arbre (21) sur lequel sont montés, respectivement, les moyens de transmission (6) ou les moyens de détermination (7) ou ledit au moins un capteur d'accélération du mouvement (8) ou les moyens d'analyse (9).

11. Roue dentée connectée (2) selon, respectivement, la revendication 1 ou 4 ou 6, **caractérisée par le fait qu'**elle comporte des moyens de raccordement de type filaire pour raccorder, d'une part, au moins une partie desdits au moins deux capteurs de température (5) et, d'autre part et respectivement, lesdits moyens de transmission (6) ou les moyens de détermination (7) ou les moyens d'analyse (9).

12. Dispositif de contrôle à distance de la température d'une dent (22) d'une roue dentée connectée (2), **caractérisé par le fait qu'**il comporte, d'une part, une roue dentée connectée (2) conforme à l'une quelconque des revendications précédentes et, d'autre part, un système de contrôle de la température de la dent (22) de la roue dentée connectée (2), ce système de contrôle est déporté par rapport à la roue dentée connectée (2) et comporte, d'une part, des moyens de réception pour recevoir au moins les données relatives aux températures relevées par lesdits au moins deux capteurs de température (5) et, d'autre part, des moyens de contrôle de la température de la dent (22) de la roue dentée connectée (2).

13. Dispositif de contrôle à distance de la température d'une dent (22) d'une roue dentée connectée (2) selon la revendication 12, **caractérisé par le fait que** le système de contrôle comporte des moyens de signalisation et/ou de visualisation d'un écart de température entre, d'une part, une température relevée par l'un desdits au moins deux capteurs de température (5) et, d'autre part, au moins une autre température relevée par au moins un autre desdits au moins deux capteurs de température (5) et/ou d'au moins une information relative à un tel écart de température, ceci lorsque cet écart de température est supérieur ou égal à une valeur déterminée.

14. Dispositif de contrôle à distance de la température du flanc (221 ; 222) d'une dent (22) d'une roue dentée connectée (2), **caractérisé par le fait qu'**il comporte, d'une part, une roue dentée connectée (2) qui est conforme à la revendication 4 et qui comporte des moyens de transmission (6) configurés pour transmettre au moins des données relatives aux températures déterminées du flanc (221 ; 222) de la dent (2) et, d'autre part, un système de contrôle de la température du flanc (221 ; 222) de la dent (22) de la roue dentée (2), ce système de contrôle est déporté par rapport à la roue dentée connectée (2) et comporte, d'une part, des moyens de réception pour recevoir au moins les données relatives aux températures déterminées du flanc (221 ; 222) de la dent (22) et, d'autre part, des moyens de contrôle de la température du flanc (221 ; 222) de la dent (22).

15. Dispositif de contrôle à distance de la température du flanc (221 ; 222) d'une dent (22) d'une roue dentée connectée (2) selon la revendication 14, **caractérisé par le fait que** le système de contrôle comporte des moyens de signalisation et/ou de visualisation d'un écart de température entre, d'une part, une température du flanc (221 ; 222) d'une dent (22) déterminée par les moyens de détermination (7) à partir d'une température relevée par l'un desdits au moins deux capteurs de température (5) et, d'autre part, au moins une autre température du flanc (221 ; 222) de la dent (22) déterminée par les moyens de détermination (7) à partir d'au moins une autre température relevée par au moins un autre desdits au moins deux capteurs de température (5) et/ou d'au moins une information relative à un tel écart de température, ceci lorsque cet écart de température est supérieur ou égal à une valeur déterminée.

16. Procédé de contrôle à distance de la température d'une dent (22) d'une roue dentée connectée (2), ce procédé consiste en ce que, d'une part, on relève la température à l'aide d'au moins deux capteurs de température (5) localisés à l'intérieur d'une rainure (24), que comporte la dent (22) de la roue dentée connectée (2), qui débouche au niveau d'une tête (220) que comporte cette dent (22), et qui s'étend radialement à partir de la tête (220) de cette dent (22) et au plus jusqu'au cercle primitif (23) de la roue dentée connectée (2), d'autre part, on transmet des données relatives aux températures relevées, ceci à un système de contrôle déporté par rapport à la roue dentée connectée (2) et, d'autre part encore et au niveau dudit système de contrôle déporté, on reçoit les données relatives aux températures relevées et on contrôle la température de la dent (22) de la roue dentée connectée (2).

17. Procédé de contrôle à distance de la température du flanc (221 ; 222) d'une dent (22) d'une roue dentée connectée (2), ce procédé consiste en ce que, d'une part, on relève la température à l'aide d'au moins deux capteurs de température (5) localisés à l'intérieur d'une rainure (24), que comporte la dent (22) de la roue dentée connectée (2), qui débouche au niveau d'une tête (220) que comporte cette dent (22), et qui s'étend radialement à partir de la tête (220) de cette dent (22) et au plus jusqu'au cercle primitif (23) de la roue dentée connectée (2), d'autre part, on détermine des températures du flanc (221 ; 222) de la dent (22), ceci à partir des températures relevées par lesdits au moins deux capteurs de température (5) et en tenant compte au moins du temps de diffusion de la chaleur et/ou de la perte de chaleur entre le flanc (221 ; 222) de la dent (22) et lesdits au moins deux capteurs de température (5), d'autre part encore, on transmet des données relatives aux températures déterminées du flanc (221 ; 222) de la dent (22), ceci à un système de contrôle déporté par rapport à la roue dentée connectée (2) et, d'autre part aussi et au niveau dudit système de contrôle déporté, on reçoit les données relatives aux températures déterminées du flanc (221 ; 222) de la dent (22) de la roue dentée connectée (2) et on contrôle la température du flanc (221 ; 222) de la dent (22) de la roue dentée connectée (2).

## Patentansprüche

1. Verbundenes Zahnrad (2), das einen Rollkreis (23) aufweist, und das einerseits eine Vielzahl von Zähnen (22), die jeweils einen Kopf (220) des Zahns (22) aufweisen, und wovon mindestens einer dieser Zähne (22) eine Nut (24) umfasst, die auf der Höhe des Kopfs (220) des mindestens einen dieser Zähne (22) einmündet, und die sich von dem Kopf (220) des mindestens einen dieser Zähne (22) und auf radiale Weise erstreckt, andererseits mindestens zwei Temperatursensoren (5), die zum Ablesen der Temperatur konfiguriert sind, und andererseits ferner Übertragungsmittel (6) zum Übertragen von mindestens Daten bezogen auf die Temperaturen, die durch die mindestens zwei Temperatursensoren (5) abgelesen werden, umfasst, **dadurch gekennzeichnet, dass** sich einerseits die Nut (24) auf längslaufende Weise über mindestens einen Teil der Länge des Kopfes (220) des mindestens einen der Zähne (22) und höchstens bis zu dem Rollkreis (23) des verbundenen Zahnrads (2) erstreckt, und andererseits sich die mindestens zwei Temperatursensoren (5) im Inneren der Nut (24) des mindestens einen dieser Zähne (22) befinden.

2. Verbundenes Zahnrad (2) nach Anspruch 1,
**dadurch gekennzeichnet, dass** sich die Nut (24) über die gesamte Länge des Zahns (22) erstreckt.

3. Verbundenes Zahnrad (2) nach einem der vorstehenden Ansprüche, **dadurch gekennzeichnet, dass** die mindestens zwei Temperatursensoren (5) im Inneren der Nut (24) sowie über die gesamte Länge dieser Nut (24) verteilt sind.

4. Verbundenes Zahnrad (2) nach einem der vorstehenden Ansprüche, **dadurch gekennzeichnet, dass** es Bestimmungsmittel (7) zum Bestimmen der Temperaturen einer Seite (221; 222) des Zahns (22) umfasst, der die mindestens zwei Temperatursensoren (5) umfasst, dies aus den Temperaturen, die durch die mindestens zwei Temperatursensoren (5) abgelesen werden.

5. Verbundenes Zahnrad (2) nach einem der vorstehenden Ansprüche, **dadurch gekennzeichnet, dass** es mindestens einen Bewegungsbeschleunigungssensor (8) des verbundenen Zahnrads (2), der zum Ablesen der Bewegungsbeschleunigung des verbundenen Zahnrads (2) konfiguriert ist, umfasst.

6. Verbundenes Zahnrad (2) nach jeweils Anspruch 1 oder 4 oder 5,
**dadurch gekennzeichnet, dass** es Analysemittel (9) zum Analysieren jeweils der abgelesenen Temperaturen oder der bestimmten Temperaturen der Seite (221; 222) des Zahns (22) oder der abgelesenen Bewegungsbeschleunigung des verbundenen Zahnrads (2) umfasst.

7. Verbundenes Zahnrad (2) nach Anspruch 6,
**dadurch gekennzeichnet, dass** einerseits die Analysemittel (9) zum Berechnen einer Temperaturabweichung zwischen einer Temperatur, die durch einen der mindestens zwei Temperatursensoren (5) abgelesen wird, und mindestens einer anderen Temperatur, die durch mindestens einen anderen der mindestens zwei Temperatursensoren (5) abgelesen wird, konfiguriert sind, und andererseits die Übertragungsmittel (6) zum Übertragen von mindestens den Daten bezogen auf die abgelesenen Temperaturen konfiguriert sind, dies, wenn diese berechnete Temperaturabweichung größer als oder gleich einem bestimmten Wert ist.

8. Verbundenes Zahnrad (2) nach den Ansprüchen 4 und 6,
**dadurch gekennzeichnet, dass** einerseits die Analysemittel (9) zum Berechnen einer Temperaturabweichung zwischen einer Temperatur der Seite (221; 222) des Zahns (22), die aus einer Temperatur bestimmt wird, die durch einen der mindestens zwei Temperatursensoren (5) abgelesen wird, und mindestens einer anderen Temperatur der Seite (221; 222) des Zahns (22), die aus mindestens einer anderen Temperatur bestimmt wird, die durch mindestens einen anderen der mindestens zwei Temperatursensoren (5) abgelesen wird, konfiguriert sind, und andererseits die Übertragungsmittel (6) zum Übertragen von mindestens den Daten bezogen auf die abgelesenen Temperaturen konfiguriert sind, dies, wenn diese berechnete Temperaturabweichung größer als oder gleich einem bestimmten Wert ist.

9. Verbundenes Zahnrad (2) nach den Ansprüchen 5 und 6,
**dadurch gekennzeichnet, dass** einerseits die Analysemittel (9) zum Vergleichen eines Bewegungsbeschleunigungswerts, der durch den mindestens einen Bewegungsbeschleunigungssensor (8) abgelesen wird, mit einem Bewegungsbeschleunigungsschwellenwert konfiguriert sind, und andererseits die Übertragungsmittel (6) zum Übertragen von Daten bezogen auf mindestens eine solche Bewegungsbeschleunigung konfiguriert sind, dies, wenn der abgelesene Bewegungsbeschleunigungswert den Schwellenwert erreicht oder überschreitet.

10. Verbundenes Zahnrad (2) nach jeweils Anspruch 1 oder 4 oder 5 oder 6, **dadurch gekennzeichnet, dass** es eine Welle (21) umfasst, auf der jeweils die Übertragungsmittel (6) oder die Bestimmungsmittel (7) oder der mindestens eine Bewegungsbeschleunigungssensor (8) oder die Analysemittel (9) montiert sind.

11. Verbundenes Zahnrad (2) nach jeweils Anspruch 1 oder 4 oder 6,
**dadurch gekennzeichnet, dass** es drahtartige Anschlussmittel zum Anschließen von einerseits mindestens einem Teil der mindestens zwei Temperatursensoren (5) und andererseits und jeweils der Übertragungsmittel (6) oder der Bestimmungsmittel (7) oder der Analysemittel (9) umfasst.

12. Fernsteuerungseinrichtung für die Temperatur eines Zahns (22) eines verbundenen Zahnrads (2), **dadurch gekennzeichnet, dass** sie einerseits ein verbundenes Zahnrad (2), das einem der vorstehenden Ansprüche entspricht, und andererseits ein Steuersystem für die Temperatur des Zahns (22) des verbundenen Zahnrads (2) umfasst, wobei dieses Steuersystem relativ zu dem verbundenen Zahnrad (2) versetzt ist und einerseits Empfangsmittel zum Empfangen mindestens der Daten bezogen auf die Temperaturen, die durch die mindestens zwei Temperatursensoren (5) abgelesen werden, und andererseits Steuermittel für die Temperatur des Zahns (22) des verbundenen Zahnrads (2) umfasst.

13. Fernsteuerungseinrichtung für die Temperatur eines Zahns (22) eines verbundenen Zahnrads (2) nach Anspruch 12, **dadurch gekennzeichnet, dass** das Steuersystem Signalisierungs- und/oder Anzeigemittel einer Temperaturabweichung zwischen einerseits einer Temperatur, die durch einen der mindestens zwei Temperatursensoren (5) abgelesen wird, und andererseits mindestens einer anderen Temperatur, die durch mindestens einen anderen der mindestens zwei Temperatursensoren (5) abgelesen wird, und/oder mindestens einer Informationseinheit bezogen auf eine solche Temperaturabweichung umfasst, dies, wenn diese Temperaturabweichung größer als oder gleich einem bestimmten Wert ist.

14. Fernsteuerungseinrichtung für die Temperatur der Seite (221; 222) eines Zahns (22) eines verbundenen Zahnrads (2), **dadurch gekennzeichnet, dass** sie einerseits ein verbundenes Zahnrad (2), das Anspruch 4 entspricht, umfasst, und die Übertragungsmittel (6), die zum Übertragen von mindestens den Daten bezogen auf die bestimmten Temperaturen der Seite (221; 222) des Zahns (2) konfiguriert sind, und andererseits ein Steuersystem für die Temperatur der Seite (221; 222) des Zahns (22) des Zahnrads (2) umfasst, wobei dieses Steuersystem relativ zu dem verbundenen Zahnrad (2) versetzt ist und einerseits Empfangsmittel zum Empfangen mindestens der Daten bezogen auf die bestimmten Temperaturen der Seite (221; 222) des Zahns (22) und andererseits Steuermittel für die Temperatur der Seite (221; 222) des Zahns (22) umfasst.

15. Fernsteuerungseinrichtung für die Temperatur der Seite (221; 222) eines Zahns (22) eines verbundenen Zahnrads (2) nach Anspruch 14,
**dadurch gekennzeichnet, dass** das Steuersystem Signalisierungs- und/oder Anzeigemittel einer Temperaturabweichung zwischen einerseits einer Temperatur der Seite (221; 222) eines Zahns (22), die durch die Bestimmungsmittel (7) aus einer Temperatur, die durch den einen der mindestens zwei Temperatursensoren (5) abgelesen wird, bestimmt wird, und andererseits mindestens einer Temperatur der Seite (221; 222) des Zahns (22), die durch die Bestimmungsmittel (7) aus der mindestens einen anderen Temperatur, die durch mindestens einen anderen der mindestens zwei Temperatursensoren (5) abgelesen wird, bestimmt wird, und/oder von mindestens einer Informationseinheit bezogen auf eine solche Temperaturabweichung umfasst, dies, wenn diese Temperaturabweichung größer als oder gleich einem bestimmten Wert ist.

16. Verfahren zum Fernsteuern der Temperatur eines Zahns (22) eines verbundenen Zahnrads (2), wobei dieses Verfahren darin besteht, dass einerseits die Temperatur mittels mindestens zweier Temperatursensoren (5) abgelesen wird, die sich im Inneren einer Nut (24) befinden, die den Zahn (22) des verbundenen Zahnrads (2) umfasst, die auf der Höhe des Kopfs (220) einmündet, der diesen Zahn (22) umfasst, und die sich von dem Kopf (220) dieses Zahns (22) und höchstens bis zu dem Rollkreis (23) des verbundenen Zahnrads (2) radial erstreckt, andererseits die Daten bezogen auf die abgelesenen Temperaturen übertragen werden, dies an ein Steuersystem, das relativ zu dem verbundenen Zahnrad (2) versetzt ist, und andererseits ferner und auf der Höhe des versetzten Steuersystems Daten bezogen auf abgelesene Temperaturen empfangen werden und die Temperatur des Zahns (22) des verbundenen Zahnrads (2) gesteuert wird.

17. Verfahren zum Fernsteuern der Temperatur der Seite (221; 222) eines Zahns (22) eines verbundenen Zahnrads (2), wobei dieses Verfahren darin besteht, dass einerseits die Temperatur mittels mindestens zweier Temperatursensoren (5) abgelesen wird, die sich im Inneren einer Nut (24) befinden, die den Zahn (22) des verbundenen Zahnrads (2) umfasst, die auf der Höhe des Kopfs (220) einmündet, der diesen Zahn (22) umfasst, und die sich von dem Kopf (220) dieses Zahns (22) und höchstens bis zu dem Rollkreis (23) des verbundenen Zahnrads (2) radial erstreckt, andererseits Temperaturen der Seite (221; 222) des Zahns (22) bestimmt werden, dies aus den Temperaturen, die durch die mindestens zwei Temperatursensoren (5) abgelesen werden, und unter Berücksichtigung mindestens der Wärmeverteilungszeit und/oder des Wärmeverlusts zwischen der Seite (221; 222) des Zahns (22) und den mindestens zwei Temperatursensoren (5), andererseits ferner Daten bezogen auf bestimmte Temperaturen der Seite (221; 222) des Zahns (22) übertragen werden, dies an ein Steuersystem, das relativ zu dem verbundenen Zahnrad (2) versetzt ist, und andererseits auch und auf der Höhe des versetzten Steuersystems Daten bezogen auf bestimmte Temperaturen der Seite (221; 222) des Zahns (22) des verbundenen Zahnrads (2) empfangen werden und die Temperatur der Seite (221; 222) des Zahns (22) des verbundenen Zahnrads (2) gesteuert wird.

## Claims

1. Smart gearwheel (2) which has a pitch circle (23) and which comprises, on the one hand, a plurality of teeth (22) each having a tooth (22) tip (220), and at least one of these teeth (22) comprises a groove (24) which opens at the tip (220) of said at least one of these teeth (22), and which extends from the tip (220) of said at least one these teeth (22) and in a radial manner, on the other hand, at least two temperature sensors (5) which are configured to detect the temperature and, furthermore, transmission means (6) for transmitting at least data relating to the temperatures detected by said at least two temperature sensors (5), **characterized in that,** on the one hand, the groove (24) extends longitudinally over at least part of the length of the tip (220) of said at least one of the teeth (22) and at most up to the pitch circle (23) of the smart gearwheel (2) and, on the other hand, said at least two temperature sensors (5) are located inside the groove (24) of said at least one of these teeth (22).

2. Smart gearwheel (2) according to claim 1, **characterized in that** the groove (24) extends over the entire length of the tooth (22).

3. Smart gearwheel (2) according to any of the preceding claims, **characterized in that** said at least two temperature sensors (5) are distributed on the inside of the groove (24) as well as over the entire length of this groove (24).

4. Smart gearwheel (2) according to any of the preceding claims, **characterized in that** it comprises determination means (7) for determining the temperatures of a flank (221; 222) of the tooth (22) which comprises said at least two temperature sensors (5), on the basis of the temperatures detected by said at least two temperature sensors (5).

5. Smart gearwheel (2) according to any of the preceding claims, **characterized in that** it comprises at least one sensor (8) for the movement acceleration of the smart gearwheel (2), which is configured to detect the movement acceleration of the smart gearwheel (2).

6. Smart gearwheel (2) according to, respectively, claim 1 or 4 or 5, **characterized in that** it comprises analysis means (9) for analyzing, respectively, the detected temperatures or the determined temperatures of the flank (221; 222) of the tooth (22) or the detected movement acceleration of the smart gearwheel (2).

7. Smart gearwheel (2) according to claim 6, **characterized in that,** on the one hand, the analysis means (9) are configured to calculate a temperature deviation between a temperature detected by one of said at least two temperature sensors (5) and at least one other temperature detected by at least one other of said at least two temperature sensors (5) and, on the other hand, the transmission means (6) are configured to transmit at least said data relating to the detected temperatures, when this calculated temperature deviation is greater than or equal to a determined value.

8. Smart gearwheel (2) according to claims 4 and 6, **characterized in that,** on the one hand, the analysis means (9) are configured to calculate a temperature deviation between a temperature of the flank (221; 222) of the tooth (22) determined on the basis of a temperature detected by one of said at least two temperature sensors (5) and at least one other temperature of the flank (221; 222) of the tooth (22) determined on the basis of at least one other temperature detected by at least one other of said at least two temperature sensors (5) and, on the other hand, the transmission means (6) are configured to transmit at least said data relating to the detected temperatures, when this calculated temperature deviation is greater than or equal to a determined value.

9. Smart gearwheel (2) according to claims 5 and 6, **characterized in that,** on the one hand, the analysis means (9) are configured to compare a movement acceleration value detected by said at least one movement acceleration sensor (8) and a movement acceleration threshold value and, on the other hand, the transmission means (6) are configured to transmit data relating to at least one such movement acceleration, when the detected movement acceleration value reaches or exceeds the threshold value.

10. Smart gearwheel (2) according to, respectively, claim 1 or 4 or 5 or 6, **characterized in that** it comprises a shaft (21) on which are mounted, respectively, the transmission means (6) or the determination means (7) or said at least one movement acceleration sensor (8) or the analysis means (9).

11. Smart gearwheel (2) according to, respectively, claim 1 or 4 or 6, **characterized in that** it comprises wire-type connection means for connecting, on the one hand, at least part of said at least two temperature sensors (5) and, on the other hand and respectively, said transmission means (6) or the determination means (7) or the analysis means (9).

12. Device for remotely monitoring the temperature of a tooth (22) of a smart gearwheel (2), **characterized in that** it comprises, on the one hand, a smart gearwheel (2) according to any of the preceding claims and, on the other hand, a system for monitoring the temperature of the tooth (22) of the smart gearwheel (2), this monitoring system is remote from the smart gearwheel (2) and comprises, on the one hand, receiving means for receiving at least the data relating to the temperatures detected by said at least two temperature sensors (5) and, on the other hand, means for monitoring the temperature of the tooth (22) of the smart gearwheel (2).

13. Device for remotely monitoring the temperature of a tooth (22) of a smart gearwheel (2) according to claim 12, **characterized in that** the monitoring system comprises means for signaling and/or displaying a temperature deviation between, on the one hand, a temperature detected by one of said at least two temperature sensors (5) and, on the other hand, at least one other temperature detected by at least one other of said at least two temperature sensors (5) and/or at least one piece of information relating to such a temperature deviation, when this temperature deviation is greater than or equal to a determined value.

14. Device for remotely monitoring the temperature of the flank (221; 222) of a tooth (22) of a smart gearwheel (2), **characterized in that** it comprises, on the one hand, a smart gearwheel (2) which is in accordance with claim 4 and which comprises transmission means (6) configured to transmit at least data relating to the determined temperatures of the flank (221; 222) of the tooth (2) and, on the other hand, a system for monitoring the temperature of the flank (221; 222) of the tooth (22) of the gearwheel (2), this monitoring system is remote from the smart gearwheel (2) and comprises, on the one hand, receiving means for receiving at least the data relating to the determined temperatures of the flank (221; 222) of the tooth (22) and, on the other hand, means for monitoring the temperature of the flank (221; 222) of the tooth (22).

15. Device for remotely monitoring the temperature of the flank (221; 222) of a tooth (22) of a smart gearwheel (2) according to claim 14, **characterized in that** the monitoring system comprises means for signaling and/or displaying a temperature deviation between, on the one hand, a temperature of the flank (221; 222) of a tooth (22) determined by the determination means (7) on the basis of a temperature detected by one of said at least two temperature sensors (5) and, on the other hand, at least one other temperature of the flank (221; 222) of the tooth (22) determined by the determination means (7) on the basis of at least one other temperature detected by at least one other of said at least two temperature sensors (5) and/or at least one piece of information relating to such a temperature deviation, when this temperature deviation is greater than or equal to a determined value.

16. Method for remotely monitoring the temperature of a tooth (22) of a smart gearwheel (2), this method consists in, on the one hand, detecting the temperature by means of at least two temperature sensors (5) located inside a groove (24), that the tooth (22) of the smart gearwheel (2) comprises, which opens at a tip (220) that this tooth (22) comprises, and which extends radially from the tip (220) of this tooth (22) and at most up to the pitch circle (23) of the smart gearwheel (2), on the other hand, transmitting data relating to the detected temperatures, to a monitoring system which is remote from the smart gearwheel (2) and, furthermore and at said remote monitoring system, receiving the data relating to the detected temperatures and monitoring the temperature of the tooth (22) of the smart gearwheel (2).

17. Method for remotely monitoring the temperature of the flank (221; 222) of a tooth (22) of a smart gearwheel (2), this method consists in, on the one hand, detecting the temperature by means of at least two temperature sensors (5) located inside a groove (24), that the tooth (22) of the smart gearwheel (2) comprises, which opens at a tip (220) that this tooth (22) comprises, and which extends radially from the tip (220) of this tooth (22) and at most up to the pitch circle (23) of the smart gearwheel (2), on the other hand, determining temperatures of the flank (221; 222) of the tooth (22), on the basis of the temperatures detected by said at least two temperature sensors (5) and taking into account at least the heat diffusion time and/or the heat loss time between the flank (221; 222) of the tooth (22) and said at least two temperature sensors (5), on the other hand, transmitting data relating to the determined temperatures of the flank (221; 222) of the tooth (22), to a monitoring system which is remote from the smart gearwheel (2) and, furthermore and at said remote monitoring system, receiving the data relating to the determined temperatures of the flank (221; 222) of the tooth (22) of the smart gearwheel (2) and monitoring the temperature of the flank (221; 222) of the tooth (22) of the smart gearwheel (2).
